# EUROPÄISCHE PATENTSCHRIFT

(11) **EP 3 425 471 B1**
(45) Veröffentlichungstag und Bekanntmachung des Hinweises auf die Patenterteilung: **13.11.2024**
(21) Anmeldenummer: 18191141.3
(22) Anmeldetag: 19.08.2014
(51) Int. Cl.: G05D 1/00

(54) **VERFAHREN ZUM STÖRUNGSFREIEN TRANSPORT VON LASTREGALEN IN WERKSHALLEN MIT TEILWEISE AUTONOMEM FAHRBETRIEB**
METHOD FOR TROUBLE-FREE TRANSPORT OF LOAD SHELVES IN WORK HALLS WITH PARTIALLY AUTONOMOUS DRIVING
PROCÉDÉ DE TRANSPORT SANS PERTURBATIONS DE RAYONNAGES DE CHARGEMENT DANS DES USINES À FONCTIONNEMENT DE ROULAGE PARTIELLEMENT AUTONOME

(30) Priorität: 26.09.2013 DE 102013016118
(43) Veröffentlichungstag der Anmeldung: 09.01.2019
(62) Teilanmeldung aus: 14821486.9
(73) Patentinhaber: Grenzebach Maschinenbau GmbH, 86663 Asbach-Baeumenheim (DE)
(72) Erfinder: Mecklinger, Siegfried, 86675 Buchdorf (DE); Kügle, Bernhard, 86415 Mering (DE)
(74) Vertreter: Page, White & Farrer Germany LLP

(56) Entgegenhaltungen:
- EP-A1- 2 045 180
- DE-A1- 102011 118 984
- US-A1- 2003 044 047
- US-A1- 2008 001 372
- US-A1- 2012 185 122
- GUNTER ULLRICH ET AL: "Fahrerlose Transportsysteme: Eine Fibel - mit Praxisanwendungen - zur Technik - fur die Planung", 19 January 2011 (2011-01-19), XP055525050, ISBN: 978-3-8348-0791-5, Retrieved from the Internet <URL:https://ebookcentral.proquest.com/lib/epo-ebooks/detail.action?docID=751971&query=fahrerlose+ullrich> [retrieved on 20181119]

## Beschreibung

Die vorliegende Erfindung betrifft ein Verfahren zum störungsfreien Transport von Lastregalen in Werkshallen mit teilweise autonomem Fahrbetrieb.

In einer Vielzahl von Unternehmensbereichen, zum Beispiel dem Handel mit Lebensmitteln und Haushaltsartikeln oder Industrie- und Haushaltsprodukten, liegen Waren in sortenreinen Quellpaletten mit gleichartigen Gebinden in Lastregalen vor. Ein Gebinde kann hierbei ein verpacktes oder unverpacktes Stückgut oder eine Warenzusammenstellung wie beispielsweise eine Kiste, ein Karton oder eine Steige mit Schüttgut oder mehreren Einzelgütern wie Getränkeflaschen oder Molkereiprodukten sein.

Zur Zusammenstellung einer Lieferung an einen bestimmten Kunden müssen hieraus Pakete mit unterschiedlicher Bestückung oder Gebinden zusammengestellt werden.

Das Herbeischaffen einzelner Bestandteile einer solchen Lieferung kann hierbei händisch erfolgen oder mittels automatisch geführter Fahrzeuge. Solche so genannten AGVs (automatic guided vehicles) können mobile Roboter oder speziell für den jeweiligen Verwendungszweck konstruierte Fahrzeuge sein, die mit einem speziellen Führungs- und Steuerungsverfahren von einem Ort zu einem anderen Ort bewegt werden. Herkömmliche automatisch geführte Fahrzeuge, mit denen zum Beispiel Materialien in Fabriken und Lagerhäusern bewegt werden, weisen eine minimale Punkt-zu-Punkt-Bewegungssteuerung auf. Die meisten solcher Systeme verwenden AGVs, die einer festen Leitspur folgen. Im Allgemeinen handelt es sich hierbei um einen Hochfrequenz-Sendeantennendraht, der im Fabrikboden versenkt angeordnet ist, einen auf den Boden aufgemalten reflektierenden Streifen, oder ein auf den Boden aufgeklebtes reflektierendes Band. Solche Leitspuren sind jedoch ersichtlich sehr verletzlich und unzuverlässig.

Alle diese Bewegungssteuerungen begrenzen die Bewegungsfreiheit der einzelnen AGV's, indem diese gezwungen werden einem physikalisch festgelegten Weg zu folgen.

Die meisten solcher Systeme verlassen sich auf die fahrzeugeigene Annäherungs-Detektion, um Kollisionen mit anderen Fahrzeugen, unbewegten Objekten oder menschlichem Personal zu vermeiden. In solchen Systemen können sich die AGV's nur in einer Richtung längs der von ihnen verfolgten Spur bewegen. Solche Systeme erreichen eine Punkt-zu-Punkt-Bewegung durch Implementieren von Steuerschemata und Verwenden frei beweglicher AGV's mit programmierbaren bidirektionalen Wegen. Hierdurch wird erreicht, dass sich mehrere AGV's ohne Kollisionen oder übermäßige Staus gleichzeitig auf denselben Wegen befinden.

Diese Verfahren maximieren den Freiheitsgrad der AGV-Bewegung. Das Steuerschema implementiert hierbei ein Schema der "statischen" Kollisionsvermeidung für AGV-Systeme. Im Wesentlichen wird dabei ein Computerprogramm verwendet zum Untersuchen der jeweiligen Umgebung eines AGV's, um nur solche Wege zu ermitteln, die für AGV's befahrbar sind. Ein weiteres Zuteilungsprogramm zieht hieraus die erforderlichen Daten um AGV's im jeweiligen System von einem Punkt zu einem anderen Punkt zu bewegen, ohne dass zwei AGV's gleichzeitig denselben Weg befahren.

Die Nachteile dieser Verfahren aus dem Stand der Technik bestehen darin, dass sie entweder auf geschlossene Pfade, eine unidirektionale Bewegung, auf das Fehlen der externen Steuerung der AGV-Bewegung oder auf die "statische" Kollisionsvermeidung beschränkt sind.

Zur Vermeidung dieser Nachteile ist aus der DE 689 28 565 T2 nach den Angaben im Patentanspruch 1 ein Verfahren zum Leiten von mehreren automatisch gelenkten Fahrzeugen (AGV) längs eines Netzes miteinander verbundener Wege bekannt, die bei Knotenpunkten beginnen, enden und Knotenpunkte enthalten.

Bei diesem Verfahren wird eine Aufzeichnung einer von den bestimmten AGV zu verfolgenden Route in Form von, bei einem Knotenpunkt beginnenden und beim nächsten Knotenpunkt endenden, Wegabschnitten erstellt.

Es wird ferner eine Angabe der Position eines bestimmten AGV's festgestellt.

Weiter wird für jeden Knotenpunkt eine Angabe abgeleitet, ob er frei oder besetzt ist.

Ferner wird für ein bestimmtes AGV eine Liste von Knotenpunkten erzeugt, die den von dem bestimmten AGV gerade aufgesuchten Knotenpunkt um wenigstens einige Knotenpunkte längs der aufgezeichneten Route enthält, die das bestimmte AGV aufsuchen wird. Dies erfolgt einschließlich der Prüfung, dass jeder Knotenpunkt in der Liste frei ist, bevor er in die Liste aufgenommen wird, sowie der Markierung jedes Knotenpunkts in der Liste als besetzt, nachdem er in die Liste aufgenommen ist. Weiter erfolgt eine Übertragung der Liste von Knotenpunkten zu den bestimmten AGV's und das Veranlassen, dass es sich längs der aufgezeichneten Route durch die Knotenpunkte vorwärts bewegt.

Die Druckschrift US 2008/001372 A1, auf der der Oberbegriff des Patentanspruchs 1 basiert, offenbart ein Verfahren zum Betrieb eines Transportfahrzeugs zum störungsfreien Transport von Lastregalen in Werkshallen mit teilweise autonomem Fahrbetrieb bekannt, wobei eine Leitzentrale dafür sorgt, dass ein Lastregal mit einem darauf befindlichen Transportgut zu einem Zielort transportiert wird, wobei die Leitzentrale ermittelt, welches Transportfahrzeug aufgrund seines derzeitigen Standortes und seiner vorliegenden Auftragslage in der Lage ist, den geforderten Auftrag am schnellsten zu erledigen, und das Transportfahrzeug daraufhin von der Leitzentrale den Auftrag erhält in einem Areal einer größeren Fläche eines Lagerbereichs das Lastregal zu suchen, das Lastregal aufzunehmen und das Lastregal mit dem darauf befindlichen Transportgut zum Zielort zu fahren. Das von der Leitzentrale ausgewählte Transportfahrzeug erhält hierbei Routen-Anweisungen hinsichtlich der zu befahrenden Route und der in jedem Streckenabschnitt zu fahrenden Geschwindigkeit zur Erreichung des Zielortes in einem bestimmten Zeitfenster. Das Transportfahrzeug erfasst hierbei mittels eines Sensors das aufzunehmende Lastregal, wählt eine geeignete Ausgangsposition zur Aufnahme des Lastregals aus, fährt darunter und hebt es hoch zum Abtransport.

Aus der Literarturstelle "Günter Ullrich et al.: "Fahrerlose Transportsysteme; Eine Fibel - mit Praxisanwendungen - zur Technik - für die Planung", 19.1.2011, XP055525050, ISBN:978-3-8348-0791-5, sind die Grundlagen für autonome Fahrsysteme und deren Leitsteuerung beschrieben.

Aus der Druckschrift DE 10 2011 118984 A1 ist ein Verfahren zur Messung von Last und Lastschwerpunktabstand bekannt, wobei ein Verformungssensor zur Messung einer auf eine Gabel eines Flurförderzeugs wirkenden Kraft verwendet wird, um die Last und den Lastschwerpunktabstand zu bestimmen.

Ferner ist aus der Druckschrift US 2012/185122 A1 ein Verfahren zur Ansteuerung eines herkömmlichen autonomen Transportfahrzeugs bekannt, wobei auch für hohe Geschwindigkeiten eine ausreichende Stabilität gewährleistet ist. Insbesondere wird hierbei der kinematische Zustand des Transportfahrzeugs über die Rotationsgeschwindigkeit und das Drehmoment der Antriebsräder des Transportfahrzeugs bestimmt.

Schließlich ist aus der Druckschrift EP 2 045 180 A1 ein Verfahren zum Betrieb eines zweirädrigen Fahrzeugs zum Transport von Gegenständen oder Personen bekannt, wobei insbesondere eine Kurvengeschwindigkeit erhöht werden kann.

Der Erfindung liegt demgegenüber die Aufgabe zugrunde, ein Verfahren zum Betrieb eines Transportfahrzeugs zu schaffen, mit dem der zuverlässige Transport von Lastregalen störungsfrei auch bei unebenem Boden und bei leichten Steigungen ausgeführt werden kann.

Erfindungsgemäß wird diese Aufgabe durch die Maßnahmen des Patentanspruchs 1 gelöst.

In den weiteren Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig. 1: eine Anordnung von zu transportierenden Lastregalen,
Fig. 2: eine Annäherung eines Transportfahrzeugs an Lastregale,

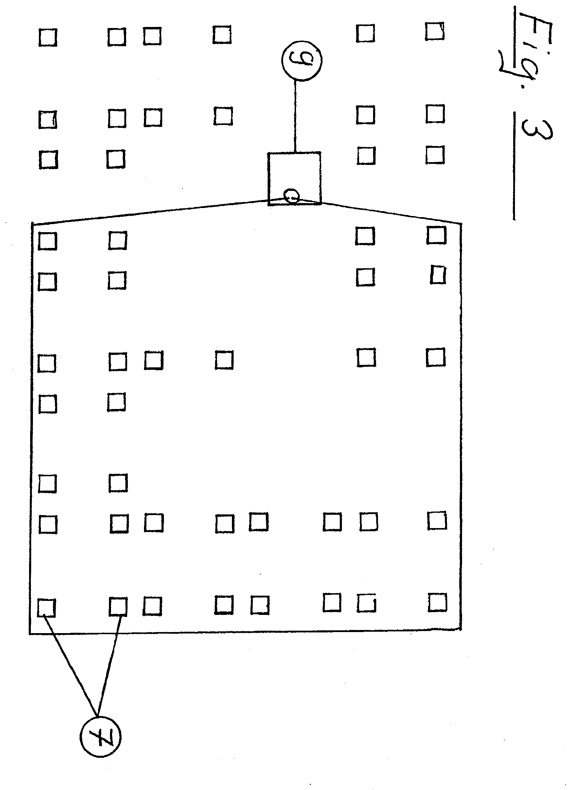

Fig. 3: eine Orientierungs-Situation eines Transportfahrzeugs,
Fig. 4: eine Seitenansicht eines beladenen Transportfahrzeugs,
Fig. 5: eine Draufsicht auf die Kinematik des Transportfahrzeugs,
Fig. 6: eine Detail-Darstellung der Kinematik des Transportfahrzeugs, und
Fig. 7: eine Abschattungs-Situation von Empfangsmöglichkeiten.

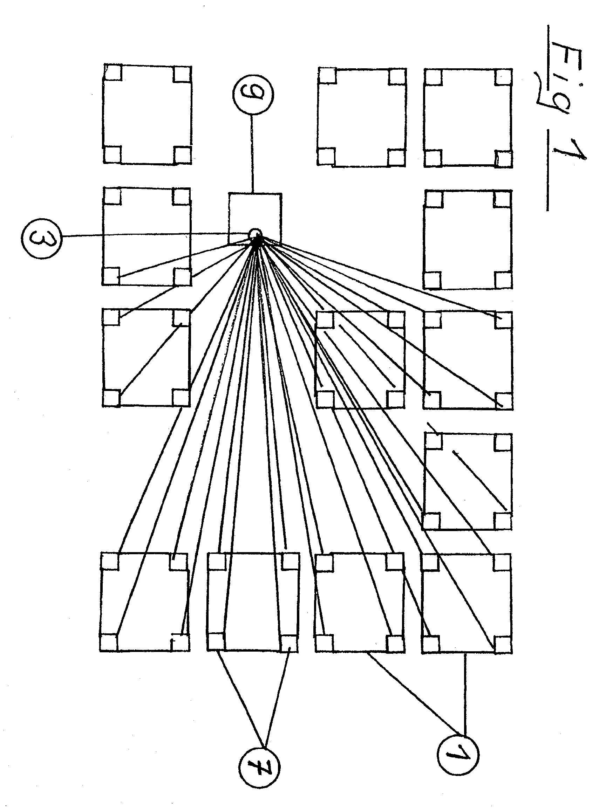

Die Fig.1 zeigt eine Anordnung von zu transportierenden Lastregalen.

In dieser Darstellung sind als Teilausschnitt einige, auf jeweils vier Regalpfosten 7 stehende, Lastregale 1 in der Draufsicht zu sehen deren genaue Lage von einem Transportfahrzeug 9 mittels eines Laser-Scanners 3 erfasst wird.

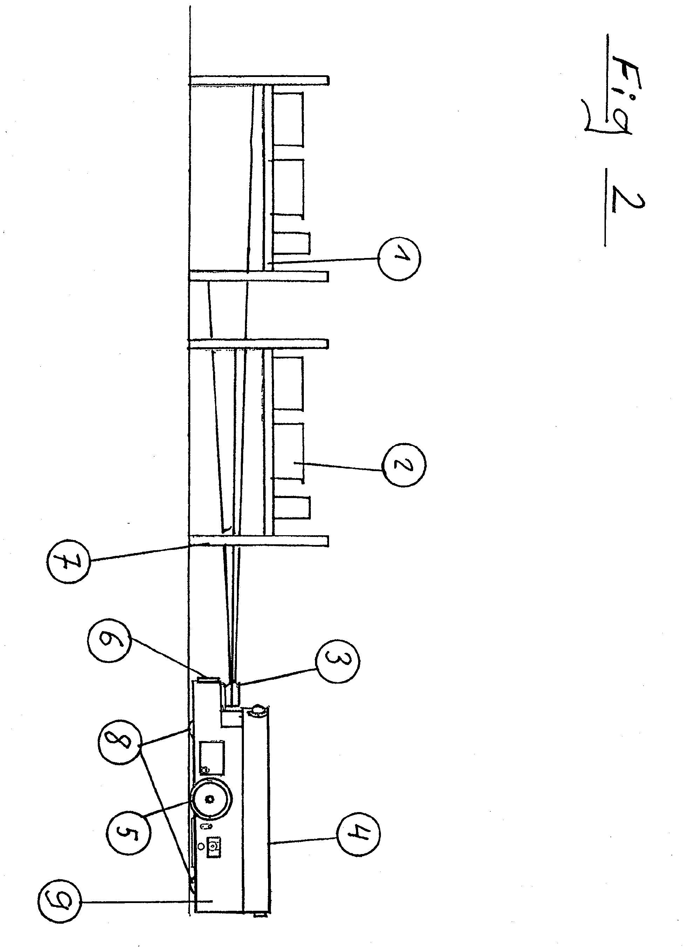

Die Fig.2 zeigt eine Annäherung eines Transportfahrzeugs 9 an Lastregale 1.

Im linken Bereich der Fig.2 sind zwei hintereinander stehende Lastregale 1 mit ihren Regalpfosten 7 und ihrem aufliegenden Transportgut 2 dargestellt. Diesen beiden Lastregalen 1 nähert sich ein Transportfahrzeug 9 mittels zweier Antriebsräder 5, von denen in der Seitenansicht lediglich eines zu erkennen ist, und einem vorderen und einem hinteren Stützrad 8. Zur Aufnahme eines Lastregals 1 weist das Transportfahrzeug 9 eine in der Höhe verstellbare Trägerplatte 4 auf. Zur Erfassung der Umgebung eines Transportfahrzeugs 9 weist jedes dieser Fahrzeuge mindestens an der Frontseite einen Laser-Scanner 3 und einen Lichtfeld-Sensor 6 auf.

Hinsichtlich des verwendeten Lichtfeld-Sensors 6, wird auf die neue Entwicklung der so genannten Minilinsen verwiesen, die in der Form von hunderten von Minilinsen nach dem Lichtfeldprinzip optische Informationen sammeln die dann später zu Bildern mit einer gewünschten Auflösung und/oder einem gewünschten Blickwinkel datentechnisch zusammengestellt werden können. Solche Minilinsen sind 3-D-fähig, billig herzustellen und folgen dem Prinzip eines Insektenauges.

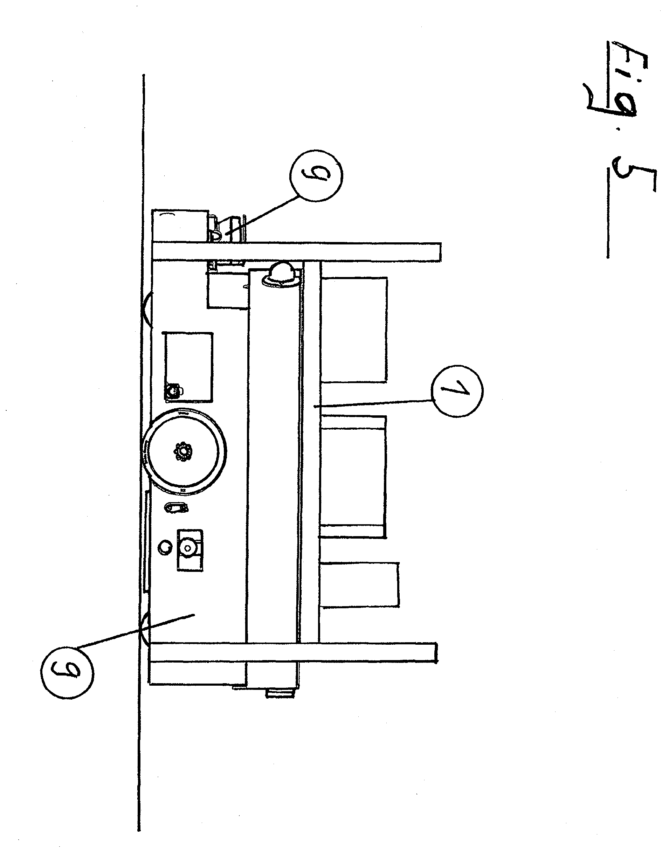

Eine nähere Beschreibung des Mechanismus der Fortbewegung und des Anhebens eines Lastregals 1 erfolgt bei der Beschreibung der Fig.5.

Die Fiq.3 zeigt eine Darstellung von Regalpfosten als Orientierungshilfe.

Für ein Transportfahrzeug 9 stellt sich die von ihm befahrene Arbeitswelt als eine Ansammlung von Regalpfosten 7 dar. Jeder Regalpfosten 7 kann an jeder seiner vier Seiten eine Markierung in Form eines Barcodes oder Data Matrixcodes aufweisen, die ihn als Bestandteil eines bestimmten Lageregals ausweist und ihn für ein Transportfahrzeug 9 in der Hauptsache mittels seines Laser-Scanners von allen Seiten identifizierbar macht.

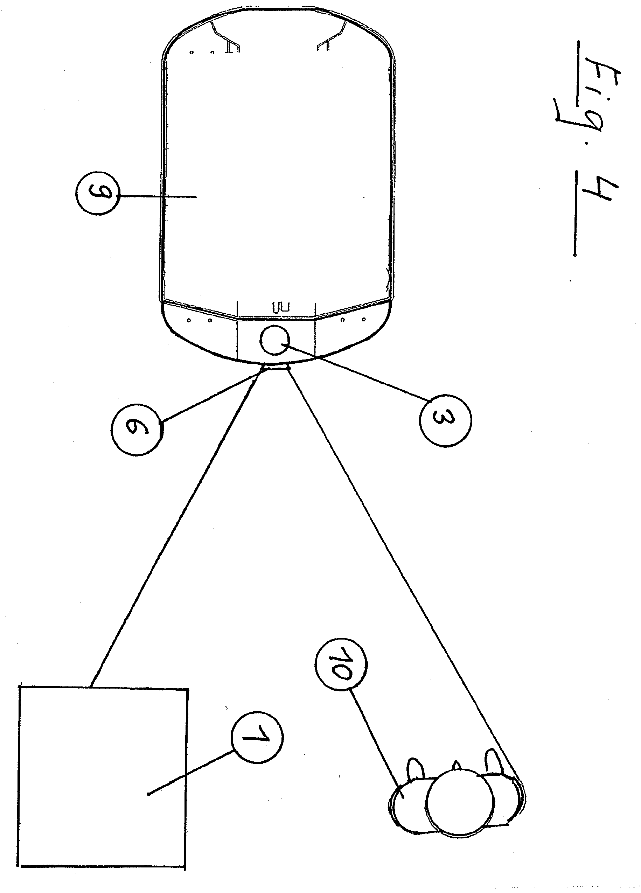

Die Fig.4 zeigt eine Orientierungs-Situation eines Transportfahrzeugs 9 mit realen Hindernissen.

Hierbei handelt es sich zum Einen um ein normales Lastregal 1, das wie vorher beschrieben, identifiziert werden kann und zum Anderen um eine Person 10, die eigentlich nicht in diese Umgebung gehört. Eine solche, ein ungewöhnliches Hindernis darstellende, Person 10 wird mittel eines Lichtfeld-Sensors von einem Transportfahrzeug 9 erkannt.

Die Fig.5 zeigt eine Seitenansicht eines beladenen Transportfahrzeugs 9. Seine Antriebsräder und die Stützräder berühren den Boden und das Lastregal 1 liegt auf der Trägerplatte des Transportfahrzeugs auf

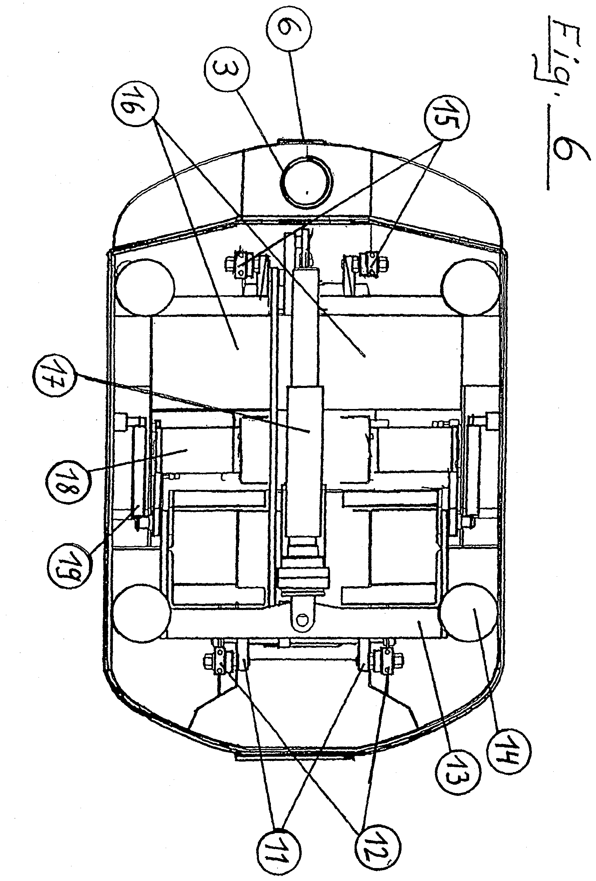

Die Fig.6 zeigt eine Draufsicht auf die Kinematik des Transportfahrzeugs 9.

In dieser Fig.6 ist in zentraler Lage in Längsrichtung ein Stellelement 17 zu erkennen das, bei einer Verlängerung in der Längsrichtung, eine Anhebung der vier eingezeichneten kreisförmigen Zentrierelemente 14 über, in dieser Darstellung nicht sichtbare, Hebelemente bewirkt. Die Zentrierelemente 14 fügen sich in entsprechende Vertiefungen der Trägerplatte ein. Als Teil der genannten Hebelelemente sind die hintere Tragplatten-Aufhängung 12 und die vordere Tragplattenaufhängung 15 zu sehen. Das Stellelement 17 stützt sich auf einen Querlenker 13 der über, hier nicht sichtbare, Hebelemente mit den beiden hinteren Hubstangenhebeln 11 verbunden ist.

In dieser Darstellung von oben sind beide Stellmotoren für die beiden Antriebsräder zu sehen, wobei lediglich der linke mit 18 bezeichnet ist. Die zu beiden Antriebsrädern führenden Federelemente stellen über, hier nicht erkennbare, Umlenkhebel sicher, dass die Antriebsräder auch auf unebenem Boden sicheren Bodenkontakt behalten. Auch hier ist lediglich das in Fahrtrichtung linksseitige Federelement mit 19 bezeichnet. Mit 16 sind jeweils ein linksseitiger und ein rechtsseitiger Stellraum für Energiespeicher dargestellt. Hierbei kann es sich um elektrische Batterien oder um Energiespeicher für andere flüssige oder gasförmige Energieformen handeln.

Ein Laser-Scanner 3 und ein Lichtfeld-Sensor 6 sind an der Vorderseite des Transportfahrzeugs 9 angebracht.

Beide Arten von Sensoren können jedoch auch zusätzlich noch an den beiden Seitenflächen und/oder an der Rückseite eines Transportfahrzeugs angebracht sein.

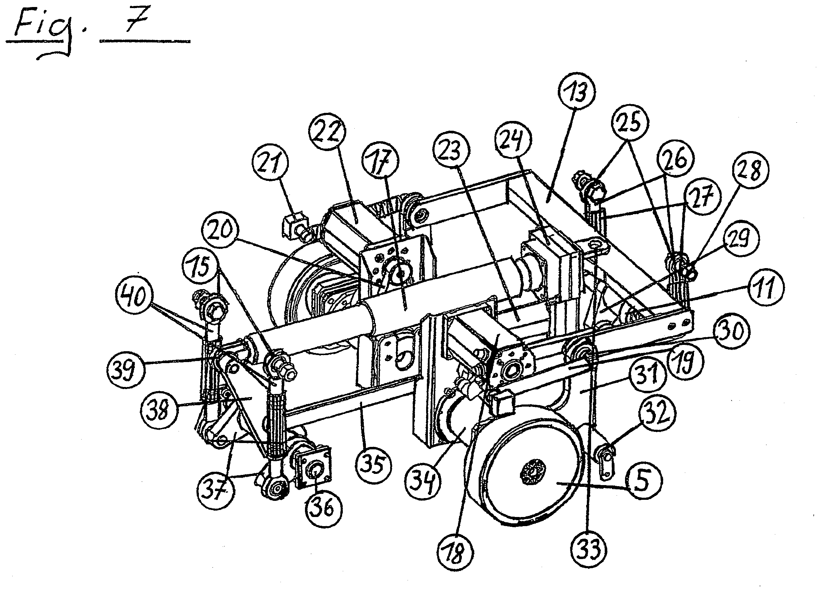

Die Fig.7 zeigt eine Detail-Darstellung der Kinematik des Transportfahrzeugs. Diese Abbildung stellt das Transportfahrzeug ohne das umhüllende Gehäuse dar. Auf Verbindungen zu dem Gehäuse wird an entsprechender Stelle hingewiesen. Zuerst wird die Kinematik der Antriebsräder erläutert Im Vordergrund ist das, aus der Fig. 2 bekannte, linksseitige Antriebsrad 5 und die zugehörige Drehachse 32 zu erkennen die an dem, nicht näher bezeichneten, Gehäuse des Transportfahrzeugs befestigt ist. Das Achslager 34 für das linksseitige Antriebsrad 5 mit seinem darüber liegenden, als Antrieb für das Antriebsrad 5 dienenden, Servomotor 18 sind mittels eines, nicht näher bezeichneten und nur von hinten zu sehendem, Winkelblech zu einer Funktionseinheit verbunden. In diesem Winkelblech läuft ein Zahnriemen über den der Servomotor 18 die Rotationsachse des linksseitigen Antriebsrads 5 antreibt. Auf der gegenüberliegenden Seite ist der entsprechende Servomotor 22 für den rechtsseitigen Antrieb zu erkennen. Auf dieser Seite ist das entsprechende Winkelblech in der gezeigten Darstellung von der Rückseite zu sehen. Hier ist der in diesem Winkelblech laufende entsprechende Zahnriemen 20 gekennzeichnet. Die gesamte Funktionseinheit, bestehend aus dem Antriebsrad 5 mit dem Achslager 34, dem Servomotor 18 und dem Winkelblech mit seinem Zahnriemen, ist über einen Winkelhebel 31 um die, schon oben erwähnte, Drehachse 32 schwenkbar. Der Winkelhebel 31 ist über ein Gelenk 30 an einem U-förmigen, über nahezu die gesamte Breite des Transportfahrzeugs verlaufenden, Querlenker 13 angelenkt, an dessen anderem Ende das rechtsseitige Antriebsrad entsprechend befestigt ist. An dem Gelenk 30 ist weiter ein Federelement 19 gelagert, dessen anderer Lagerungspunkt am Gehäuse des Transportfahrzeugs befestigt ist. Auf der in der Fig.7 sichtbaren linken Seite des Transportfahrzeugs ist dieser Anlenkpunkt als klötzchenförmige, kaum erkennbare über dem Antriebsrad 5 gezeichnete, Lagerung gezeigt.

Dagegen ist auf der gegenüberlegenden Seite dieser Punkt als Anlenkpunkt 21 des entsprechenden rechten Federelements bezeichnet. Das Federelement 19 dient dem Zweck, über den Winkelhebel 31 das Antriebsrad 5 auf die Bodenfläche zu drücken und somit den Bodenkontakt des Antriebsrads 5 zu verbessern. Entsprechendes gilt für das gegenüber liegende rechte Antriebsrad.

Eine weitere kinematische Einrichtung wird im Folgenden zum Anheben eines Lastregals 1 erläutert.

Um ein Lastregal 1 aufnehmen zu können ist es erforderlich, dass das Transportfahrzeug nach dem Darunterfahren unter das Lastregal 1 dieses anhebt und seinen Bodenkontakt löst um es transportieren zu können.

Diesem Zweck dienen in direktem Kontakt die vorderen Hubstangen 40 und die hinteren Hubstangen 26.

Angehoben und abgesenkt werden die Hubstangen 40 und 26 mittels eines Stellelements 17, das wiederum mittels einer Gewindespindel über einen ein- und ausfahrbaren Zylinder über einen Gelenkkopf 39 und einen angelenkten Hubdreh-Hebel 38 die hierfür notwendigen Kräfte aufbringt.

Aus der Fig.7 ist linksseitig deutlich zu erkennen wie der Hubdreh-Hebel 38 im Zusammenwirken mit jeweils einem vorderen Hubstangenhebel 37 mittels entsprechender Drehbewegungen um eine Drehachse 36, die mit dem Gehäuse des Transportfahrzeugs verbunden ist, die notwendigen Anhebungen oder Absenkungen der beiden vorderen Hubstangen 40 bewirkt.

Die vorderen Hubstangen 40 tragen jeweils die entsprechende vordere Trägerplatten-Aufhängung.

Gleichzeitig ist diesem Bereich der Fig.7 zu entnehmen, dass an dem Hubdreh-Hebel 38 eine Schubstange 35 angelenkt ist, die die Bewegungen des Hubdreh-Hebels 38 über einen Achshebel 29 auf jeweils einen hinteren Schubstangenhebel 11 überträgt. Die Bewegungen der hinteren Schubstangenhebel 11 führen zu den notwendigen Anhebungen oder Absenkungen der beiden hinteren Hubstangen 26. Die hinteren Hubstangen 26 tragen jeweils die entsprechende hintere Tragplatten -Aufhängung 25, ein entsprechendes Verbindungselement mit dem Gehäuse ist mit 28 bezeichnet. Die vordere Tragplatten-Aufhängung ist mit 15 bezeichnet.

Die Bewegung des Stellelements 17, bzw. seiner Gewindespindel, erfolgt über einen Antrieb 23 und eine, die Kraft umleitende, Kraftübertragung 24. Die Kraftübertragung 24 ist mittels eines Gabelkopfs 33 am Querlenker 13 befestigt. Da der Gabelkopf 33 drehbar am Querlenker 13 gelagert ist, kann sich der Querlenker 13, als Verbindungselement zwischen den Winkelhebeln 31 und seinem gegenüberliegenden Pendant, bewegen und so wird ermöglicht, dass die beiden Antriebsräder voneinander unabhängige, vertikale Schwenkbewegungen ausführen können.

Die vorderen Hubstangen 40 und die die hinteren Hubstangen 26 weisen noch jeweils zusätzliche Stellelemente auf die, die gesamte Trägerplatte aus jeweils einer, der Lagesicherung beim Fahrbetrieb dienenden, Raststellung herausheben, bevor der eigentliche Vorgang der Anhebung des Transportguts beginnt. Beispielhaft sind hier für die hinteren Hubstangen die Stellelemente 27 bezeichnet. Die Ansteuerung der genannten Stellelemente kann separat und unabhängig von der vorher beschriebenen Anhebung des Transportguts erfolgen.

Insgesamt wird durch die aufgezeigte Anordnung der Hubstangen 40 und 26, die dazwischen liegende Hebelanordnungen und das Stellelement 17 in Zusammenwirkung mit dem Querlenker 13, sowie dessen Einwirken auf den Winkelhebel 31 und sein Pendant, erreicht, dass der Schwerpunkt der Last von dem Lastregal direkt im Bereich der Antriebsräder liegt.

Zur Erfassung der Neigung des Transportfahrzeugs und des Transportguts wird ein besonderer Sensor verwendet, der jedoch nicht extra bezeichnet ist.

Da das Transportfahrzeug den Transport von Transportgut über schräge Ebenen ermöglicht, kann in vielen Fällen auf teuere und steuerungstechnisch aufwendige Liftanlagen verzichtet werden.

Es kann in einer besonderen Ausbildung vorgesehen sein, dass der Schwerpunkt des Lastregals 1 mittels Sensoren erfasst, und das Ergebnis einer solchen Schwerpunkt-Ermittlung zur Steuerung der Stellelemente der Hubstangen 40 und 26 verwendet wird.

Weiter kann es in einer besonderen Ausgestaltung vorgesehen sein, dass Sensoren zur Erfassung der Drehbewegung der Antriebsräder 5 vorgesehen sind, die auch in Abhängigkeit von der Geschwindigkeit des Transportfahrzeugs den Schlupf an jedem Antriebsrad 5 ermitteln können.

Weiter kann es vorgesehen sein, mittels eines Neigungssensors die Neigung eines Lastregals 1 ermittelt wird.

Zur Steuerung der beschriebenen Transportfahrzeuge wird bevorzugt ein bekanntes Verfahren eingesetzt das von der Technischen Universität Berlin entwickelt wurde und am 10. Oktober 2007 veröffentlicht wurde unter:
Dynamic Routing of Automated Guided Vehicles in Real-time. (Ewgenij Gawrilow, Ekkehard Köhler, Rolf H.Möhring, Björn Stenzel) [http://www.math.tu-berlin.de/coga/publications/techreports/]

Es handelt sich hierbei im Wesentlichen um einen zweiteiligen Algorithmus, dessen erster Teil einen vorbereitenden Schritt umfasst und dessen zweiter Teil in Echtzeit eine Route berechnet und dabei für jeden Abschnitt ein bestimmtes Zeitfenster vorsieht.

Die Anwendung des hier beschriebenen Verfahrens betraf ein AGV-Netzwerk im Container-Terminal Altenwerder im Hamburger Hafen. Die Anwendung desselben Verfahrens zum störungsfreien Betrieb von Automated Guided Vehicles in einem Warenhaus erscheint dagegen neu. Die Steuerung der komplexen Bewegungsvorgänge und die Signalverarbeitung der verwendeten Sensoren erfordern ein spezielles Steuerungsprogramm.

### Bezugszeichenliste

- 1: Lastregal
- 2: Transportgut
- 3: Laser-Scanner, 3D-Scanner zum Kollissionsschutz
- 4: Trägerplatte, Hubplatte
- 5: Antriebsrad
- 6: Lichtfeld-Sensor
- 7: Regalpfosten
- 8: Stützrad
- 9: Transportfahrzeug, Fahrzeugkörper
- 10: Person
- 11: hintere Hubstangenhebel
- 12: hintere Tragplatten - Aufhängung
- 13: Querlenker
- 14: Zentrierelement
- 15: vordere Tragplatten-Aufhängung
- 16: Stellraum für Energiespeicher
- 17: Stellelement, Gewindespindel
- 18: Servomotor für linksseitiges Antriebsrad
- 19: Federelement
- 20: Zahnriemen für den rechtsseitigen Antrieb
- 21: Anlenkpunkt des rechtsseitigen Federelements am Gehäuse
- 22: Servomotor für den rechtsseitigen Antrieb
- 23: Antrieb für das Stellelement 17
- 24: Kraftübertragung des Antriebs 23 zum Stellelement 17
- 25: hintere Tragplatten-Aufhängung mit Verbindungselementen
- 26: hintere Hubstange
- 27: Stellelement für eine hintere Hubstange
- 28: Verbindungselement für eine hintere Tragplatten-Aufhängung 25
- 29: Achshebel
- 30: Gelenk eines Winkelhebels 31
- 31: Winkelhebel
- 32: Drehachse
- 33: Gabelkopf
- 34: Achslager für das linksseitige Antriebsrad
- 35: Schubstange
- 36: Drehachse für eine Hubstangenhebel 37
- 37: vorderer Hubstangenhebel
- 38: Hubdreh-Hebel
- 39: Gelenkkopf
- 40: vordere Hubstange

## Patentansprüche

1. Verfahren zum Betrieb eines Transportfahrzeugs mit zwei Antriebsrädern (5) und zwei Stützrädern (8) zum störungsfreien Transport von Lastregalen in Werkshallen mit teilweise autonomem Fahrbetrieb mit den folgenden Merkmalen:
a) eine Leitzentrale in einem Lagerbereich erhält den Auftrag, dafür zu sorgen, dass ein Lastregal (1) mit einem darauf befindlichen Transportgut (2) zu einem Zielort transportiert wird,
b) die Leitzentrale ermittelt welches Transportfahrzeug (9) aufgrund seines derzeitigen Standortes und seiner vorliegenden Auftragslage in der Lage ist, den geforderten Auftrag am schnellsten zu erledigen,
c) das Transportfahrzeug (9) erhält daraufhin von der Leitzentrale den Auftrag in einem Areal einer größeren Fläche eines Lagerbereichs das Lastregal (1) zu suchen, das Lastregal (1) aufzunehmen und das Lastregal (1) mit dem darauf befindlichen Transportgut (2) zum Zielort zu fahren,
d) das von der Leitzentrale ausgewählte Transportfahrzeug (9) erhält von der Leitzentrale mittels eines bestimmten Routen-Algorithmus ermittelte Routen-Anweisungen hinsichtlich der zu befahrenden Route und der in jedem Streckenabschnitt zu fahrenden Geschwindigkeit zur Erreichung des Zielortes in einem bestimmten Zeitfenster,
e) das Transportfahrzeug (9) ermittelt mittels eines 3D-Sensors das aufzunehmende Lastregal (1), wählt eine geeignete Ausgangsposition zur Aufnahme des Lastregals (1) aus, fährt darunter und hebt es hoch zum Abtransport,
**dadurch gekennzeichnet, dass**
das Lastregal (1) mittels zwei vorderen und zwei hinteren Hubstangen (40, 26) des Transportfahrzeugs (1) über ein Stellelement (17) angehoben und abgesenkt werden kann,
ein Schwerpunkt des Lastregals (1) mittels Sensoren ermittelt wird,
das Ergebnis einer solchen Schwerpunkt-Ermittlung zur Ansteuerung von zusätzlichen Stellelementen (27) für die vorderen und hinteren Hubstangen (40, 26) des Transportfahrzeugs (9) verwendet wird, wobei die Ansteuerung der zusätzlichen Stellelemente (27) separat und unabhängig von der Anhebung und Absenkung des Lastregals erfolgt, und
die beiden Antriebsräder (5) jeweils von einem Federelement (19) über einen Winkelhebel (31) auf eine Bodenfläche gedrückt werden.

2. Verfahren nach Anspruch 1, **dadurch gekennzeichnet, dass** eine Neigung des Lastregals (1) mittels eines Neigungssensors ermittelt wird.

3. Verfahren nach Anspruch 1 oder 2, **dadurch gekennzeichnet, dass** eine Drehbewegung der beiden Antriebsräder (5) durch Sensoren erfasst wird, die auch in Abhängigkeit von der Geschwindigkeit des Transportfahrzeugs den Schlupf an jedem Antriebsrad (5) ermitteln können.

4. Verfahren nach einem der Ansprüche 1 bis 3, **dadurch gekennzeichnet, dass** das Lastregal (1) an allen Seiten seiner Regalpfosten (7) eine Markierung in Form eines Barcodes oder eines Datamatrixcodes aufweist.

## Claims

1. Method for operating a transport vehicle having two drive wheels (5) and two support wheels (8) for the interference-free transport of load shelves in factory buildings in a partially autonomous driving mode, the method comprising the following features:
a) a control centre in a storage area receives the order to ensure that a load shelf (1) having transported goods (2) located thereon is transported to a destination;
b) the control centre determines which transport vehicle (9), based on its current location and its present order status, is capable of handling the required order the fastest;
c) the transport vehicle (9) subsequently receives from the control centre the order to seek the load shelf (1) in a region of a comparatively large surface of a storage area, to pick up the load shelf (1), and to drive the load shelf (1) having the transported goods (2) located thereon to the destination;
d) the transport vehicle (9) selected by the control centre receives from the control centre route instructions pertaining to the route to be travelled and the speed to be travelled in each section of the route, which route instructions are determined by means of a specific route algorithm, in order to reach the destination in a specific time window;
e) the transport vehicle (9) determines the load shelf (1) to be picked up by means of a 3D-sensor, chooses a suitable initial position for picking up the load shelf (1), drives below the latter and lifts it for transporting,
**characterized in that**
the load shelf (1) can be lifted and lowered by means of two front and two rear lifting rods (40, 26) of the transport vehicle (1) by way of a control member (17);
a centre of gravity of the load shelf (1) is determined by means of sensors;
the result of such a centre-of-gravity determination is used for actuating additional control members (27) for the front and the rear lifting rods (40, 26) of the transport vehicle (9), wherein the actuation of the additional control members (27) takes place separately and independently of lifting and lowering the load shelf; and
the two drive wheels (5) are in each case pushed onto a floor area by a spring element (19) by way of an angular lever (31).

2. Method according to Claim 1, **characterized in that** an inclination of the load shelf (1) is determined by means of an inclination sensor.

3. Method according to Claim 1 or 2, **characterized in that** a rotating movement of the two drive wheels (5) is detected by sensors which can also determine the slippage of each drive wheel (5) as a function of the speed of the transport vehicle.

4. Method according to one of Claims 1 to 3, **characterized in that** the load shelf (1) on all sides of its shelf unit posts (7) has a marking in the form of a barcode or of a data matrix code.

## Revendications

1. Procédé de fonctionnement d'un véhicule de transport doté de deux roues motrices (5) et de deux roues d'appui (8) et destiné au transport sans encombre de rayonnages dans des halls d'usine en mode de fonctionnement partiellement autonome, présentant les caractéristiques suivantes :
a) un centre de contrôle dans une zone de stockage reçoit la commande d'assurer le transport d'un rayonnage (1), sur lequel se trouve une marchandise à transporter (2), jusqu'à une destination souhaitée ;
b) le centre de contrôle détermine quel véhicule de transport (9) est en mesure d'accomplir au plus vite la commande requise en se basant sur sa position actuelle et sur son présent carnet de commandes ;
c) le véhicule de transport (9) reçoit ensuite du centre de contrôle la commande de rechercher le rayonnage (1) dans une aire d'une plus grande superficie d'une zone de stockage, de saisir le rayonnage (1) et de conduire le rayonnage (1) avec la marchandise à transporter (2) qui s'y trouve dessus jusqu'à la destination souhaitée ;
d) le véhicule de transport (9) sélectionné par le centre de contrôle reçoit du centre de contrôle des instructions d'itinéraire déterminées au moyen d'un algorithme d'itinéraire spécifique et qui concernent l'itinéraire à parcourir et la vitesse à parcourir dans chaque tronçon de l'itinéraire afin d'atteindre la destination souhaitée dans une fenêtre de temps spécifique ;
e) le véhicule de transport (9) détermine le rayonnage à saisir (1) au moyen d'un capteur 3D, sélectionne une position de départ qui est appropriée pour saisir le rayonnage (1), lui passe en dessous et le soulève en hauteur pour permettre son enlèvement,
**caractérisé en ce que** :
le rayonnage (1) peut être soulevé et descendu au moyen de deux tiges de levage avant et de deux tiges de levage arrière (40, 26) du véhicule de transport (9) via un élément de positionnement (17) ;
un centre de gravité du rayonnage (1) est déterminé au moyen de capteurs ;
le résultat d'une telle détermination de centre de gravité est utilisé afin de piloter des éléments de positionnement supplémentaires (27) pour les tiges de levage avant et arrière (40, 26) du véhicule de transport (9), dans lequel le pilotage des éléments de positionnement supplémentaires (27) est réalisé de manière séparée et indépendante du levage et de la descente du rayonnage ; et
les deux roues motrices (5) sont pressées contre la surface du sol respectivement par un élément de ressort (19) via un levier coudé (31).

2. Procédé selon la revendication 1, **caractérisé en ce qu'**une inclinaison du rayonnage (1) est déterminée au moyen d'un capteur d'inclinaison.

3. Procédé selon la revendication 1 ou 2, **caractérisé en ce qu'**un mouvement de rotation des deux roues motrices (5) est détecté par des capteurs qui peuvent également déterminer le patinage au niveau de chaque roue motrice (5) en fonction de la vitesse du véhicule de transport.

4. Procédé selon l'une des revendications 1 à 3, **caractérisé en ce que** le rayonnage (1) comporte un marquage sous la forme d'un code-barres ou d'un code de matrice de données sur tous les côtés de ses montants de rayonnage (7).
